# EUROPEAN PATENT SPECIFICATION

(11) **EP 4 217 213 B1**
(45) Date of publication and mention of the grant of the patent: **20.11.2024**
(21) Application number: 21798858.3
(22) Date of filing: 23.09.2021
(51) Int. Cl.: B60C 11/24, B60C 23/06

(54) **ADJUSTMENT OF INDIRECTLY DETERMINED VALUES OF A TIRE MONITORING SYSTEM**
EINSTELLUNG INDIREKT BESTIMMTER WERTE EINES REIFENÜBERWACHUNGSSYSTEMS
RÉGLAGE DE VALEURS DÉTERMINÉES INDIRECTEMENT D'UN SYSTÈME DE SURVEILLANCE DE PNEUMATIQUE

(30) Priority: 25.09.2020 US 202063083423 P
(43) Date of publication of application: 02.08.2023
(73) Proprietor: Sensata Technologies, Inc., Attleboro, MA 02703 (US)
(72) Inventor: STEWART, William D., Attleboro, Massachusetts 02703 (US)
(74) Representative: Ungerer, Olaf
(86) International application number: PCT/US2021/051698
(87) International publication number: WO 2022/066867

(56) References cited:
- DE-A1- 102017 221 142
- US-A1- 2010 186 492
- US-A1- 2015 239 298
- US-A1- 2017 363 515
- US-A1- 2020 189 328

## Description

### BACKGROUND

A tire monitoring system may use a first measurement indicating a first vehicle condition to infer or indirectly determine a second measurement indicating a second vehicle condition. However, such indirect determinations of the second measurement may be susceptible to inaccuracies due to the quality and accuracy of the first measurement. US 2015/239298 A1 discloses a method for determining a tire tread depth during operation of a vehicle. The method includes determining an instantaneous rotational speed of a vehicle wheel having the tire based on data determined by at least one first sensor, then determining a vehicle speed based on data determined by at least one different second sensor, then determining an instantaneous dynamic wheel radius based on the determined instantaneous rotational speed and the determined instantaneous speed. At least one first tire parameter selected from an instantaneous tire temperature, tire pressure and tire load is determined. An instantaneous dynamic inner wheel radius is determined based on the at least one determined first parameter, wherein the inner wheel radius is the distance between the center of the wheel and the tire-side start or seam of the tread. A tire tread depth is determined based on the determined instantaneous dynamic radius and the determined instantaneous dynamic inner radius.

DE 10 2017 221142 A1 discloses a method for determining a tread depth of a profile of a tire during operation of a vehicle having the tire, a control device for a vehicle for determining such a tread depth of a profile of a tire of the vehicle, and a system for a vehicle that comprises such a control device and at least one electronic wheel unit, wherein a determination of the tread depth based on a determined instantaneous dynamic wheel radius of a wheel of the vehicle having the tire and a determined instantaneous dynamic inner radius of the tire is provided. US 2010/186492 A1 discloses a method for estimating the degree of wear of a tire.

US 2017/363515 A1 discloses methods and apparatus for assessing tire health through monitoring an effective tire rolling radius.

US 2020/189328 A1 discloses a method for ascertaining a tread depth of a tire during operation of a vehicle having the tire, the vehicle transmitting adaptation data to a central data processor.

### SUMMARY

The invention is defined by the attached set of claims. Methods, systems, apparatuses, and computer program products for adjustment of indirectly determined values of a tire monitoring system are disclosed. In a particular embodiment, adjustment of indirectly determined values of a tire monitoring system includes a tire monitoring controller identifying an indirectly determined value associated with a tire. The tire monitoring controller also identifies one or more tire parameters from one or more direct measurement devices. The tire monitoring controller uses the one or more tire parameters from the one or more direct measurement devices to adjust the indirectly determined value. The tire monitoring controller uses the adjusted indirectly determined value to indirectly determine a wear condition value for the tire.

In another embodiment, not falling under the scope of the claims, adjustment of indirectly determined values of a tire monitoring system includes a tire monitoring controller identifying an indirectly determined load value associated with a tire. The tire monitoring controller also identifies one or more tire parameters from one or more direct measurement devices. The tire monitoring controller uses the one or more tire parameters from the one or more direct measurement devices to adjust the indirectly determined load value.

In another embodiment, not falling under the scope of the claims, adjustment of indirectly determined values of a tire monitoring system includes a tire monitoring controller identifying an indirectly determined grip value associated with a tire. The tire monitoring controller also identifies one or more tire parameters from one or more direct measurement devices. The tire monitoring controller uses the one or more tire parameters from the one or more direct measurement devices to adjust the indirectly determined grip value.

In yet another embodiment, adjustment of indirectly determined values of a tire monitoring system includes a tire monitoring controller identifying an indirectly determined wear condition value associated with a tire. The tire monitoring controller also identifies one or more tire parameters from one or more direct measurement devices. The tire monitoring controller uses the one or more tire parameters from the one or more direct measurement devices to adjust the indirectly determined wear condition value for the tire.

As explained above, the indirectly determined measurements of a tire monitoring system may be subject to inaccuracies due to the quality and accuracy of the base measurements. According to embodiments of the present invention, a tire monitoring system may improve the accuracy of the initial indirectly determined values (e.g., expansion value, load value, grip value, and wear condition value), by adjusting or compensating the initial indirectly determined values based on one or more tire parameters from a direct measurement device (e.g., a tire mounted sensor, a wheel mounted sensor, a valve mounted sensor). Improved accuracy in a tire monitoring system may increase the value and reliability of said system and its measurements. In addition to the advantage of improved accuracy, implementing the described tire monitoring system in vehicles with sensors and systems that are configured to generate tire parameters has the added advantage of achieving these improvements without additional sensor technology.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### BRIEF DESCRIPTION OF THE DRAWINGS

FIG. 1 sets forth a block diagram of a system for adjustment of indirectly determined values of a tire monitoring system in accordance with the present disclosure;
FIG. 2 illustrates a reference diagram of a tire in accordance with the present disclosure;
FIG. 3 illustrates a reference diagram of a tire in accordance with the present disclosure;
FIG. 4 illustrates a block diagram of an exemplary vehicle control system configured for adjustment of indirectly determined values of a tire monitoring system;
FIG. 5 illustrates another block diagram of an exemplary telematics control unit configured for adjustment of indirectly determined values of a tire monitoring system;
FIG. 6 illustrates a block diagram of an exemplary tire sensor configured for direct tire monitoring of a wheeled motor vehicle;
FIG. 7A is a flowchart of an example method for adjustment of indirectly determined values of a tire monitoring system;
FIG. 7B is a flowchart of an example method for adjustment of indirectly determined values of a tire monitoring system;
FIG. 8A is a flowchart of an example method for adjustment of indirectly determined values of a tire monitoring system not falling under the scope of the claims;
FIG. 8B is a flowchart of an example method for adjustment of indirectly determined values of a tire monitoring system not falling under the scope of the claims;
FIG. 9A is a flowchart of an example method for adjustment of indirectly determined values of a tire monitoring system not falling under the scope of the claims;
FIG. 9B is a flowchart of an example method for adjustment of indirectly determined values of a tire monitoring system not falling under the scope of the claims;
FIG. 10A is a flowchart of an example method for adjustment of indirectly determined values of a tire monitoring system; and
FIG. 10B is a flowchart of an example method for adjustment of indirectly determined values of a tire monitoring system;

### DETAILED DESCRIPTION

The terminology used herein for the purpose of describing particular examples is not intended to be limiting for further examples. Whenever a singular form such as "a", "an" and "the" is used and using only a single element is neither explicitly nor implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B, as well as A and B. An alternative wording for the same combinations is "at least one of A and B". The same applies for combinations of more than two elements.

Accordingly, while further examples are capable of various modifications and alternative forms, some particular examples thereof are shown in the figures and will subsequently be described in detail. However, this detailed description does not limit further examples to the particular forms described. Like numbers refer to like or similar elements throughout the description of the figures, which may be implemented identically or in modified form when compared to one another while providing for the same or a similar functionality.

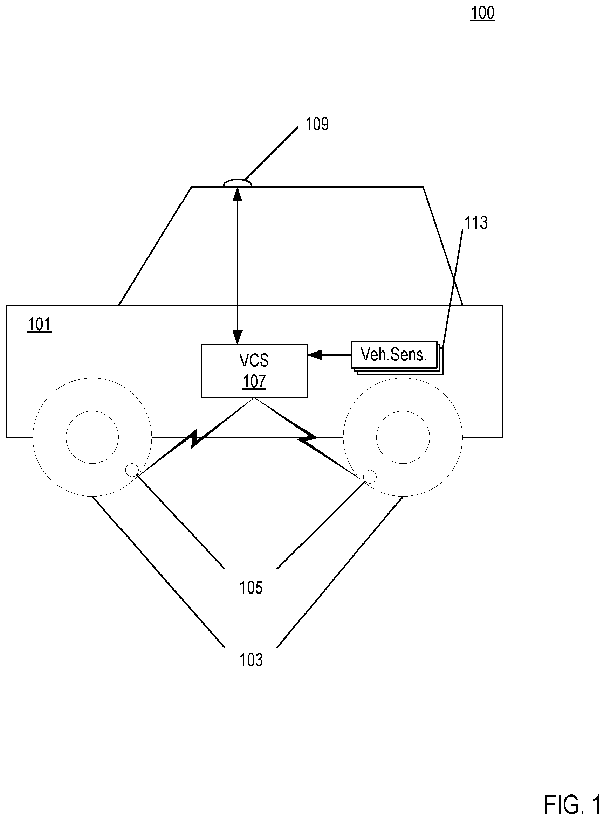

Exemplary methods, apparatuses, and computer program products for adjustment of indirectly determined values of a tire monitoring system in accordance with the present disclosure are described with reference to the accompanying drawings, beginning with FIG. 1. For further explanation, FIG. 1 sets forth a diagram of a system 100 for adjustment of indirectly determined values of a tire monitoring system. The system of FIG. 1 includes a motor vehicle 101 equipped with four tires 103 (two are illustrated). The invention is not limited to such a motor vehicle. The invention can also be used in connection with any number of tires, including a motorcycle having only one front tire and one rear tire. In the example of FIG. 1, each of the tires is equipped with a tire sensor 105. A tire sensor may be a tire mounted sensor (TMS), a valve mounted sensor (VMS), or a wheel rim mounted sensor.

While the embodiment of FIG. 1 shows two tires each equipped with a tire sensor 105, it will be understood that as few as one, and as many as all, of the tires 103 of the vehicle 101 may include a tire sensor 105. The vehicle of FIG. 1 further includes a vehicle control system (VCS) 107 that controls various components and systems within a vehicle. In a particular embodiment, the VCS (107) includes a plurality of electronic control units (ECUs) that are configured to control one or more vehicle subsystems. Commonly referred to as the vehicle's "computers", an ECU may be a central control unit or may refer collectively to one or more vehicle subsystem control units, such as an Engine Control Module (ECM), a Powertrain Control Module (PCM), a Transmission Control Module (TCM), a Brake Control Module (BCM), a Central Timing Module (CTM), a General Electronic Module (GEM), or a Suspension Control Module (SCM). In an embodiment according to the present disclosure, the VCS 107 includes a BCM that includes an Antilock Braking System (ABS) and an Electronic Stability Program (ESP). Alternatively, the VCS 107 may comprise a Telematics Control Unit (TCU) independent of vehicle-based sensors (e.g., an aftermarket system).

Each tire sensor 105 is equipped with a wireless transceiver for bidirectional wireless communication with the VCS 107, as will be described in more detail below. The VCS is similarly equipped with a wireless transceiver for bidirectional wireless communication with each of the tire sensors 105, as will be described in more detail below. The bidirectional wireless communication may be realized by low power communication technology such as Bluetooth Low Energy or other low power bidirectional communication technology that is intended to conserve energy consumed. Alternatively, each tire sensor 105 may include a unidirectional transmitter configured to transmit signals to the VCS 107.

Each vehicle system may include sensors (113) used to measure and communicate vehicle operating conditions. For example, the ABS may include wheel speed sensors on the wheelbase used to measure wheel speed. The ESP subsystem may include yaw rate sensors configured to measure the yaw-induced acceleration of the vehicle when the vehicle is maneuvering a curve. Readings from such sensors 113 may be provided to the VCS 107, which may provide parameters based on these readings to the tire sensor 105. The vehicle 101 may further include a transceiver 109 communicatively coupled to the VCS 107 for cellular terrestrial communication, satellite communication, or both.

The arrangement of devices making up the exemplary system illustrated in FIG. 1 are for explanation, not for limitation. Data processing systems useful according to various embodiments of the present disclosure may include additional servers, routers, other devices, and peer-to-peer architectures, not shown in FIG. 1, as will occur to those of skill in the art. Networks in such data processing systems may support many data communications protocols, including for example TCP (Transmission Control Protocol), IP (Internet Protocol), Bluetooth protocol, Near Field Communication, Controller Area Network (CAN) protocol, and others as will occur to those of skill in the art. Various embodiments of the present disclosure may be implemented on a variety of hardware platforms in addition to those illustrated in FIG. 1.

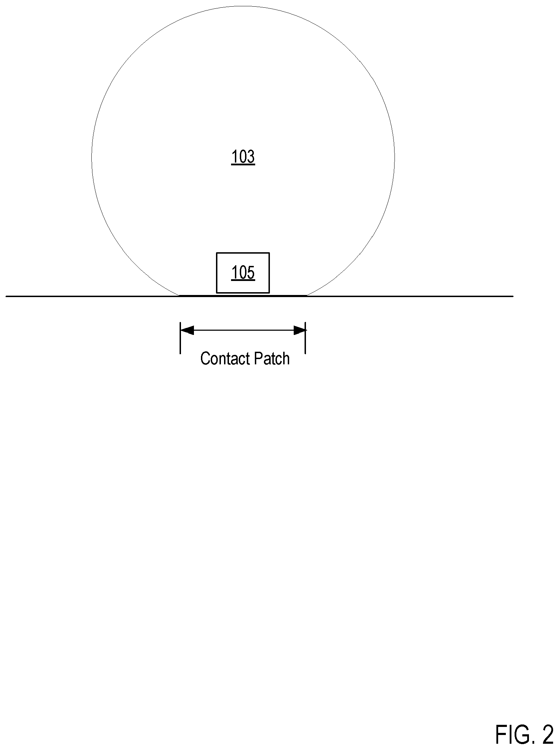

For further explanation, FIG. 2 illustrates a block diagram of a tire having a tire sensor 105. Typically, the tire sensor 105 is mounted on to a valve or tire, or otherwise coupled to, an internal surface of the tire 103, especially on the inner liner of the tire above the tread. As the tire 103 rotates, the portion that engages with the road surface at any given time is flattened. The flattened portion is known as the tire footprint or, interchangeably, contact patch. One or more features of the tire 103, in particular the length of the contact patch (typically measured in the direction of travel of the vehicle), may be used, for example, as an indication of the load on the tire 103. Electrical signals produced by the tire sensor 105 can be used to measure the contact patch, in particular its length. It will be understood that one or more of the tires 103 of the vehicle 101 may each include a tire sensor 105 for providing one or more target signals in respect of which pulse width measuring is performed.

In another embodiment, the signals from the tire sensor may be used to calculate peak radial displacement (PRD). PRD is the peak magnitude of radial deformation at the tire contact patch. Both CPL and PRD are influenced by tire load and pressure, and, accordingly, tires may be characterized by comparing the magnitude of CPL or PRD with varying pressure and load. Characteristic equations may be stored, for example, in the TMS (105) of FIG. 1 or in the vehicle control unit (107) of FIG. 1. CPL may be estimated by measuring the time at which the radial acceleration is returning to and is at zero g. This time is then expressed as a quotient/ratio of the time for a complete rotation, and the CPL is derived from its ratio of the known tire circumference or tire radius. In order to determine the PRD, the radial accelerometric signal may be integrated twice with respect to time. For load estimation, either of these two methods can be used independently.

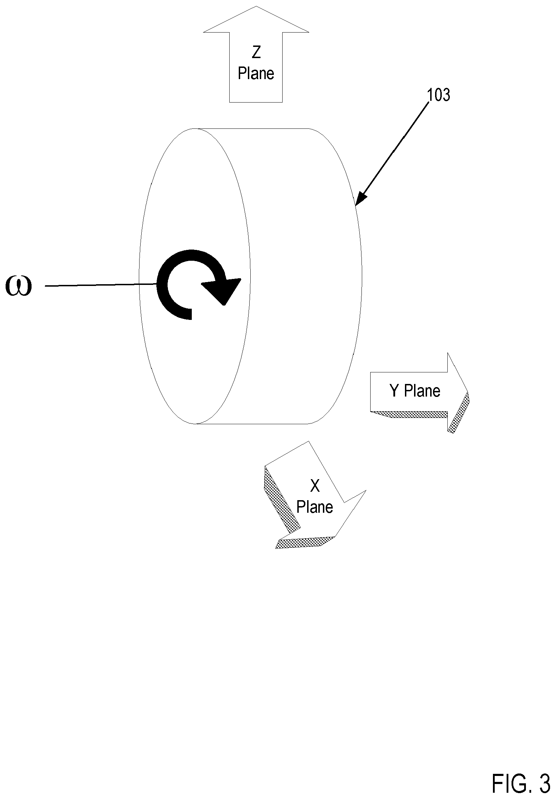

For further explanation, FIG. 3 illustrates a reference diagram of a tire 103 in accordance with the present disclosure. As used in this disclosure, the z-axis of the tire 103 is the direction of radial force during rotation, the y-axis of the tire is the direction of lateral force during rotation, and the x-axis of the tire 103 is the direction of tangential force during rotation. The angular speed of rotation is represented by ω, and is also referred to herein as wheel speed.

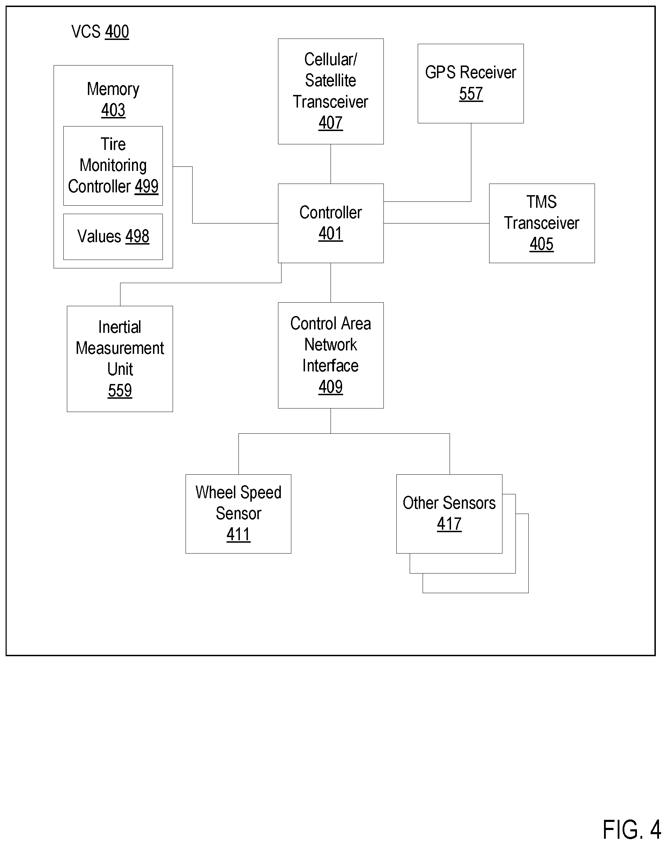

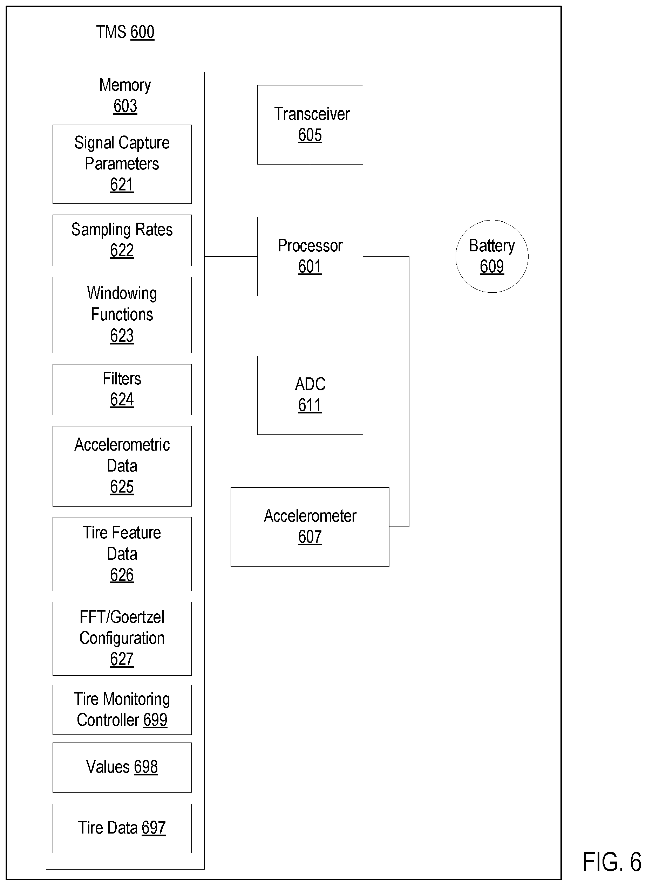

For further explanation, FIG. 4 sets forth a diagram of an exemplary vehicle control system (VCS) 400 for adjustment of indirectly determined values of a tire monitoring system according to embodiments of the present disclosure. The VCS 400 includes a controller 401 coupled to a memory 403. The controller 401 is configured to obtain sensor readings related to vehicle operating conditions, as well as data from sources external to the vehicle, and provide configuration parameters to a tire sensor, such as tire sensor 600 (see FIG. 6). The controller 401 may include or implement a microcontroller, an Application Specific Integrated Circuit (ASIC), a digital signal processor (DSP), a programmable logic array (PLA) such as a field programmable gate array (FPGA), or other data computation unit in accordance with the present disclosure. The sensor readings and data, as well as tire feature data received from the tire sensor, may be stored in the memory 403. The memory 403 may be a non-volatile memory such as flash memory. For example, the VCS 400 may obtain vehicle operating condition data such as sensor readings from sensors on-board the vehicle.

For bidirectional wireless communication with a tire sensor, the VCS 400 includes a tire sensor transceiver 405 coupled to the controller 401. In one embodiment, the tire sensor transceiver 405 is a Bluetooth Low Energy transmitter-receiver. In other embodiments, the tire sensor transceiver 405 may be other types of low power bidirectional communication technology that is intended to conserve energy consumed in the tire sensor. The VCS 400 may further include a transceiver 407 for cellular terrestrial communication, satellite communication, or both.

The VCU 400 also includes a Global Positioning System (GPS) receiver 457 configured to communicate with one or more GPS satellites in order to determine a vehicle location, speed, direction of movement, etc. The VCU 400 also includes an inertial measurement unit (IMU) 459 configured to measures a vehicle's specific force, angular rate, and/or orientation using a combination of accelerometers, gyroscopes, and/or magnetometers.

The VCS 400 may further comprise a controller area network (CAN) interface 409 for communicatively coupling vehicle sensors and devices to the controller 401. In the example of FIG. 4, the CAN interface 409 couples a wheel speed sensor 411 and other sensors 417, to the controller 401. The wheel speed sensor 411 measures the rotational angular speed of the wheel, e.g., in radians per second. The wheel speed sensor 411 may transmit readings to the controller 401 via the CAN interface 409.

The memory 403 of the VCS 400 includes a tire monitoring controller 499 configured for adjustment of indirectly determined values of a tire monitoring system. In a particular embodiment, the tire monitoring controller 499 includes computer program instructions that when executed by the controller 401 cause the controller 401 to carry out the steps of: identifying an indirectly determined value; identifying one or more tire parameters from one or more direct measurement devices; using the one or more tire parameters from the one or more direct measurement devices to adjust the indirectly determined value; and using the adjusted indirectly determined value to indirectly determine a wear condition value for the tire.

In a second embodiment, the tire monitoring controller 499 includes computer program instructions that when executed by the controller 401 cause the controller 401 to carry out the steps of: identifying an indirectly determined load value; identifying one or more tire parameters from one or more direct measurement devices; and using the one or more tire parameters from the one or more direct measurement devices to adjust the indirectly determined load value.

In a third embodiment, the tire monitoring controller 499 includes computer program instructions that when executed by the controller 401 cause the controller 401 to carry out the steps of: identifying an indirectly determined grip value; identifying one or more tire parameters from one or more direct measurement devices; and using the one or more tire parameters from the one or more direct measurement devices to adjust the indirectly determined grip value.

In a fourth embodiment, the tire monitoring controller 499 includes computer program instructions that when executed by the controller 401 cause the controller 401 to carry out the steps of: identifying an indirectly determined wear condition value; identifying one or more tire parameters from one or more direct measurement devices; and using the one or more tire parameters from the one or more direct measurement devices to adjust the indirectly determined wear condition value for the tire.

In a particular embodiment, the memory 403 may also store indirectly determined values 498 (e.g., expansion values; load values, grip values, and wear condition values). As will be explained below, the tire monitoring controller may generate these indirectly determined values or alternatively may receive these indirectly determined values from another vehicle component.

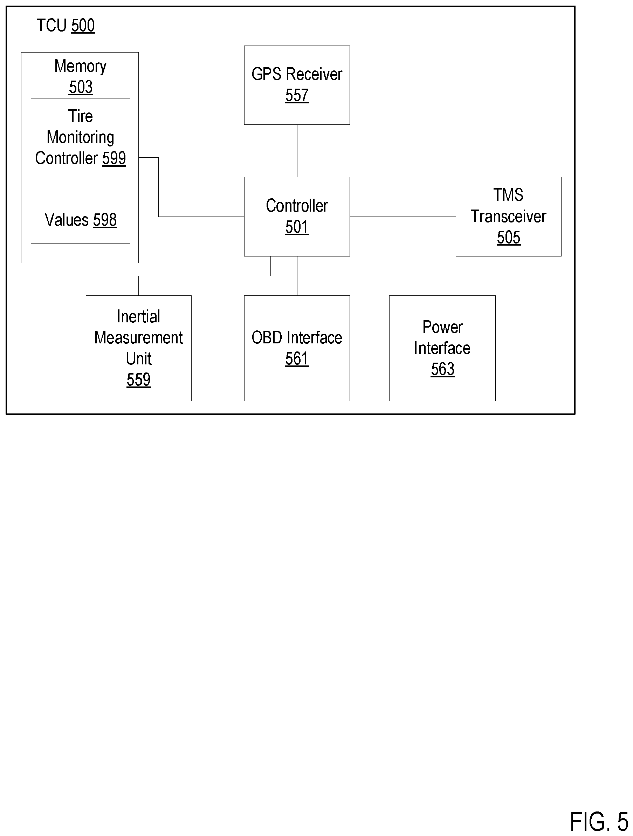

For further explanation, FIG. 5 sets forth a diagram of an embodiment of a Telematics Control Unit (TCU) 500 (e.g., an aftermarket system not directly coupled to vehicle-based sensors. The TCU 500 includes a controller 501, memory 503, and tire sensor transceiver 505 performing similar functions as described above with respect to the VCS 400 Figure 4. The TCU 500 also includes a Global Positioning System (GPS) receiver 557 configured to communicate with one or more GPS satellites in order to determine a vehicle location, speed, direction of movement, etc. The TCU 500 also includes an inertial measurement unit (IMU) 559 configured to measures a vehicle's specific force, angular rate, and/or orientation using a combination of accelerometers, gyroscopes, and/or magnetometers. The TCU 500 also includes an on-board diagnostics (OBD) interface 561 for coupling the TCU 500 to one or more on-board diagnostic devices of a vehicle. The TCU 500 may receive power via a power interface (563) couplable to a vehicle power bus.

The memory 503 of the TCU 500 includes a tire monitoring controller 599 includes computer program instructions that when executed by the controller 501 cause the controller to carry out the steps of: identifying an indirectly determined value; identifying one or more tire parameters from one or more direct measurement devices; using the one or more tire parameters from the one or more direct measurement devices to adjust the indirectly determined value; and using the adjusted indirectly determined value to indirectly determine a wear condition value for the tire.

In a second embodiment, the tire monitoring controller 599 includes computer program instructions that when executed by the controller 501 cause the controller 501 to carry out the steps of: identifying an indirectly determined load value; identifying one or more tire parameters from one or more direct measurement devices; and using the one or more tire parameters from the one or more direct measurement devices to adjust the indirectly determined load value.

In a third embodiment, the tire monitoring controller 599 includes computer program instructions that when executed by the controller 501 cause the controller 501 to carry out the steps of: identifying an indirectly determined grip value; identifying one or more tire parameters from one or more direct measurement devices; and using the one or more tire parameters from the one or more direct measurement devices to adjust the indirectly determined grip value.

In a fourth embodiment, the tire monitoring controller 599 includes computer program instructions that when executed by the controller 501 cause the controller 501 to carry out the steps of: identifying an indirectly determined wear condition value; identifying one or more tire parameters from one or more direct measurement devices; and using the one or more tire parameters from the one or more direct measurement devices to adjust the indirectly determined wear condition value for the tire.

In a particular embodiment, the memory 503 may also store indirectly determined values 598 (e.g., expansion values; load values, grip values, and wear condition values). As will be explained below, the tire monitoring controller may generate these indirectly determined values or alternatively may receive these indirectly determined values from another vehicle component.

For further explanation, FIG. 6 sets forth a diagram of an exemplary tire sensor 600 for determining tread depth according to embodiments of the present disclosure. The tire sensor 600 includes a processor 601. The processor may include or implement a microcontroller, an Application Specific Integrated Circuit (ASIC), a digital signal processor (DSP), a programmable logic array (PLA) such as a field programmable gate array (FPGA), or other data computation unit in accordance with the present disclosure.

The tire sensor 600 of FIG. 6 also includes a memory 603 coupled to the processor 601. The memory may store signal capture configuration parameters 621 and other data received from the VCS 400. The memory 603 may store a sampling rates table 622 of sampling rates each corresponding to a specific parameter value, e.g., a wheel speed or rotational period of the tire. The memory 603 may also store a windowing function table 623 of windowing functions each corresponding to a specific parameter value, e.g., a wheel speed or rotational period of the tire. The memory 603 may also store a filter table 624 filter frequency bands, each corresponding to a specific parameter value, e.g., a wheel speed or rotational period of the tire. The memory 603 may also store accelerometric data 625, including a raw digital signal sampled from the accelerometer 607 by the ADC 611 and a processed accelerometric waveform processed by the processor 601. The memory 603 may also store tire feature data 626, such as a CPL measurement or a PRD measurement extracted by the processor 601. The memory 603 may also store FFT or Goertzel algorithm configurations 627.

For bidirectional wireless communication with the VCS 400, the tire sensor 600 of FIG. 6 includes a transceiver 605 coupled to the processor 601. In one embodiment, the transceiver 605 is a Bluetooth Low Energy transmitter-receiver. In other embodiments, the transceiver 605 may be other types of low energy bidirectional communication technology that is intended to conserve energy consumed in the tire sensor 600. The tire sensor 600 transmits extracted tire feature data, such as acceleration profiles, PRD, and CPL, to the VCS 400 via the transceiver 605. In an alternative embodiment, the tire sensor 600 includes a unidirectional transmitter configured to transmit data to the VCS 400.

The accelerometer 607 of FIG. 6 may also be an acceleration sensor, an accelerometric device, a shock sensor, a force sensor, a microelectromechanical systems (MEMs) sensor, or other device that is similarly responsive to acceleration magnitude and/or to changes in acceleration or tire deformation. For example, an accelerometer senses acceleration in the radial plane (z-plane) and outputs an electric pulse signal responsive to sensed acceleration. In an embodiment, the accelerometer 607 is configurable with an accelerometer range, a wheel speed parameter, or other vehicle parameter provided by the VCS 400. For example, g-offset can be determined via wheel speed sensor or another vehicle parameter and used to capture and process signals faster. Accelerometers may have a selectable range of forces they can measure. These ranges can vary from ±1g up to ±700g. An example range of an accelerometer is ± 200g. The accelerometer range may be configured based on wheel speed, for example, ± 150g at a low speed, ±250g at a medium speed, and ±500g at a high speed. Typically, the smaller the range, the more sensitive the readings will be from the accelerometer.

The tire sensor 600 of FIG. 6 also includes an analog to digital converter (ADC) 611 that receives the electric pulse signals from the accelerometer 607 and samples them according to a sampling rate. The ADC 611 converts the raw analog signals received from the accelerometer 607 into a raw digital signal that is suitable for digital signal processing. The sample rate of the ADC 611 may be configured via wheel speed from the wheel speed sensor or another vehicle-provided parameter from a vehicle sensor.

The tire sensor 600 of FIG. 6 also includes a battery 609 connected to a power bus (not shown) to power the transceiver 605, the processor 601, the ADC 611, the accelerometer 607, and the memory 603. One skilled in the art that the tire sensor 600 may be powered by other sources alternative to or in addition to the battery 609, such as an energy harvester or other power source.

In some embodiments, the tire sensor 600 may be configured to calculate tread depth while driving. For example, the tire sensor 600 may determine the CPL of a tire based on data from the accelerometer 607. In this example, CPL may be estimated by measuring the time at which the radial acceleration is returning to and is at zero g. This time is then expressed as a quotient/ratio of the time for a complete rotation, and the CPL is derived from its ratio of the known tire expansion.

The memory 603 of the tire sensor 600 includes a tire monitoring controller 699 includes computer program instructions that when executed by the controller 601 cause the controller 601 to carry out the steps of: identifying an indirectly determined value; identifying one or more tire parameters from one or more direct measurement devices; using the one or more tire parameters from the one or more direct measurement devices to adjust the indirectly determined value; and using the adjusted indirectly determined value to indirectly determine a wear condition value for the tire.

In a second embodiment, the tire monitoring controller 699 includes computer program instructions that when executed by the controller 601 cause the controller 601 to carry out the steps of: identifying an indirectly determined load value; identifying one or more tire parameters from one or more direct measurement devices; and using the one or more tire parameters from the one or more direct measurement devices to adjust the indirectly determined load value.

In a third embodiment, the tire monitoring controller 699 includes computer program instructions that when executed by the controller 601 cause the controller 601 to carry out the steps of: identifying an indirectly determined grip value; identifying one or more tire parameters from one or more direct measurement devices; and using the one or more tire parameters from the one or more direct measurement devices to adjust the indirectly determined grip value.

In a fourth embodiment, the tire monitoring controller 699 includes computer program instructions that when executed by the controller 601 cause the controller 601 to carry out the steps of: identifying an indirectly determined wear condition value; identifying one or more tire parameters from one or more direct measurement devices; and using the one or more tire parameters from the one or more direct measurement devices to adjust the indirectly determined wear condition value for the tire.

In a particular embodiment, the memory 603 may also store indirectly determined values 698 (e.g., expansion values; load values, grip values, and wear condition values). As will be explained below, the tire monitoring controller may generate these indirectly determined values or alternatively may receive these indirectly determined values from another vehicle component. In the example of FIG. 6, the memory 603 also includes tire data 697 that includes identifications of tires.

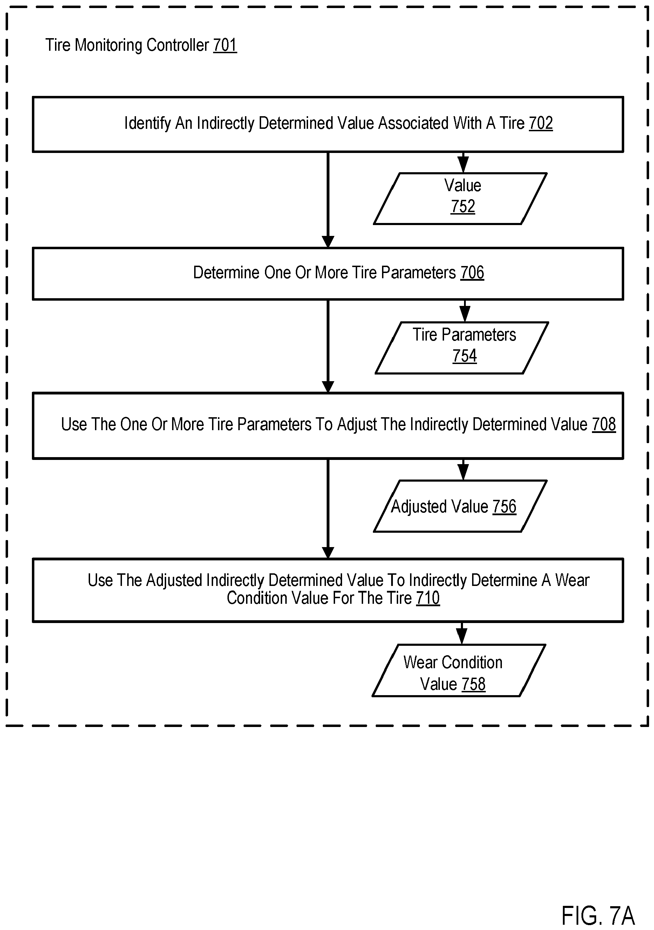

For further explanation, FIG. 7A sets forth a flow chart illustrating an exemplary method for adjustment of indirectly determined values of a tire monitoring system according to embodiments of the present disclosure. The method of FIG. 7A includes identifying 702, by a tire monitoring controller 701, an indirectly determined value 752 associated with a tire. As explained above, a tire monitoring controller according to embodiments of the present invention may be implemented in a variety of vehicle components. For example, the tire monitoring controller 701 may be: the example tire monitoring controller 499 within the Vehicle Control System 400 of FIG. 4, the example tire monitoring controller 599 within the Telematics Control Unit 500 of FIG. 5, and the tire monitoring controller 699 within the tire sensor 600 of FIG. 6.

An indirectly determined value is an estimate, inference, or other indirectly determined indication of a condition of a tire (e.g., a degree of expansion of a tire). Examples of indirectly determined values may include but are not limited to tire radius values, tire circumference values, and tire diameter values.

Identifying 702, by a tire monitoring controller 701, an indirectly determined value 752 associated with a tire may be carried out by determining an identification for a particular tire; and selecting, from a plurality of indirectly determined values, an indirectly determined value having a tag or identification associated with an identification for the particular tire.

In a particular embodiment, the indirectly determined value may be generated by another vehicle component other than the tire monitoring controller 701. In this embodiment, a tire monitoring controller may receive one or more indirectly determined values from another vehicle component. For example, a tire monitoring controller in a tire sensor may receive indirectly determined values generated by a vehicle control system (VCS).

In another embodiment, the indirectly determined value may be generated by the tire monitoring controller 701. In this embodiment, the tire monitoring controller may indirectly determine a value and store the indirectly determined value in a memory or storage location accessible by the tire monitoring controller.

In addition, the method of FIG. 7A includes identifying 706, by the tire monitoring controller 701, one or more tire parameters 754 from one or more direct measurement devices. A direct measurement device is a device that is configured to directly measure a tire parameter. Tire parameters in the example of FIG. 7A are values that impact the condition (e.g., circumference) of the tire and therefore may be used to compensate or adjust an indirectly determined value of the tire. Examples of tire parameters include but are not limited to speed values, tire stiffness parameters, tire max load rating values, max pressure rating value, tire age value, distance traveled value, and others as will occur to those of skill in the art. Identifying 706, by the tire monitoring controller 701, one or more tire parameters 754 may be carried out by requesting and receiving one or more tire parameters from one or more components of the vehicle including a tire sensor, vehicle sensors, a VCS, and a TCU. The tire monitoring controller may have access to memory or a storage location that store the one or more tire parameters. Alternatively, identifying 706, by the tire monitoring controller 701, one or more tire parameters 754 may be carried out by directly measuring one or more of the tire parameters. In another embodiment, identifying 706, by the tire monitoring controller 701, one or more tire parameters 754 may be carried out by accessing the tire parameters.

The method of FIG. 7A also includes using 708, by the tire monitoring controller 701, the one or more tire parameters 754 to adjust the indirectly determined value 752. Using 708, by the tire monitoring controller 701, the one or more tire parameters 754 to adjust the indirectly determined value 752 may be carried out by applying one or more algorithms or indexes that define a relationship between the one or more tire parameters and an expansion value. For example, each tire parameter may have a defined relationship with an expansion value. An index or algorithm may codify that relationship, such that the tire monitoring controller may use the index or algorithm to generate an adjusted indirectly determined value.

In a particular embodiment, the one or more tire parameters 754 include a speed value that indicates a measured vehicle speed or rotational speed of the tire. For example, as a tire rotates across a road surface, the tire is subject to centrifugal force. This centrifugal force acts on the tire in a manner such that the tire is "pulled" in a direction that is outwards from the center of the wheel hub (in the radial plane), having a similar effect as an increase in pressure but with a lesser degree of magnitude. This centrifugal force is proportional to the square of the rotational speed of the tire or the square of the linear velocity of the tire or the vehicle. The tire monitoring controller may use an index or algorithm that defines the relationship between speed values and circumference expansion. In that respect, the additional input of the speed value may be indicated by a measured vehicle speed or tire rotational speed. For example, tire rotational speed may be measured from either the vehicle wheel speed sensors or measured by a tire sensor (e.g., tire mounted sensor (TMS), valve mounted sensor (VMS), or wheel rim sensor). In this example, the wheel speed sensors or tire sensors may communicate the speed value to a vehicle-based system by radio frequency, Bluetooth low energy (BLE), or other means.

In a particular embodiment, the one or more tire parameters 754 include a distance traveled value that indicates a distance that a tire has traveled. As a tire travels and becomes worn down, indirectly determined values, such as an expansion value, may be impacted. The tire monitoring controller may use an index or algorithm that defines the relationship between distance traveled values and circumference size. In that respect, the additional input of the distance traveled value may be indicated by a rotations count or miles count. For example, distance traveled value may be measured from either the vehicle sensors or a vehicle-based system (e.g., VCS).

In another embodiment, the one or more tire parameters 754 include one or more tire stiffness parameters. The magnitude of a tire expansion and hence circumference change due to pressure and speed is dependent on a tire's characteristic stiffness. To determine the stiffness coefficients for a given tire model, various loads and pressures can be applied to the tire using a flat track, a drum tester, a static test, or through a simulation or model. The measurements can then be used to solve for the coefficients of the polynomial function. For example, assume a polynomial function *f*(*x*, *y*) = *p*00 + *p*10*x* + *p*01*y* + *p*20*x*² + *p*11*xy,* where x is the inflated tire pressure, y is the applied load, and p00, p10, p01, p20, and *p*11 are the stiffness coefficients. The tire coefficients may then be determined by solving for the polynomial function using the test samplings. It is understood that a higher order polynomial function may also be used, resulting in additional polynomial coefficients. The stiffness coefficients may then be stored in a database or other data structure that associates a tire model identifier (e.g., a model number) with a particular set of stiffness coefficients. The tire monitoring controller may adjust the load value by using an index or algorithm that defines the relationship between the tire stiffness parameters and circumference expansion.

These coefficients are indicative of the relationship between the vertical compression load at an applied pressure and the resultant tire radial displacement or deformation at the ground contact surface. Additionally, these stiffness coefficients are a gauge of the relationship between the centrifugal radial forces subjected on the tire, which are applicable to pressure and speed, and the degree of resulting circumferential expansion. In a particular embodiment, the tire stiffness coefficients may be expressed as one or more tire stiffness parameters. The tire stiffness parameters may be stored in various locations (e.g., cloud, vehicle ECU, or tire sensor) for access by the tire monitoring controller. The tire monitoring controller may use an index or algorithm that defines the relationship between tire coefficient parameters and circumference expansion to adjust the initial indirectly determined values.

Furthermore, the method of FIG. 7A includes using 710, by the tire monitoring controller 701, the adjusted indirectly determined value 756 to indirectly determine a wear condition value 758 for the tire. A wear condition value may indicate tread depth, loss of tread, tread wear or any other indication of wear. Using 710, by the tire monitoring controller 701, the adjusted indirectly determined value 756 to indirectly determine a wear condition value 758 for the tire may be carried out by applying one or more algorithms or indexes that define a relationship between the adjusted indirectly determined value to a wear condition value. An index or algorithm may define the relationship between the circumference expansion and the wear condition value.

As explained above, a tire monitoring controller that uses measurements associated with a tire to infer or indirectly determine an expansion value for a tire may be susceptible to inaccuracies due to the quality and accuracy of the measurements and how those measurements were generated. By adjusting the expansion value based on one or more tire parameters, the accuracy of the expansion value may be improved for a tire monitoring system. Using a more accurate expansion value may allow a tire monitoring system to indirectly determine a wear condition value of the tire more accurately. Increasing the accuracy of indirect measurements for a wear condition value of a tire may increase the value of the system to a user or vehicle control system. For vehicles with sensors and systems that are configured to capture tire parameters, another advantage of implementing the tire monitoring system of the present invention is that the accuracy of the wear condition value determination may be achieved without additional sensor technology.

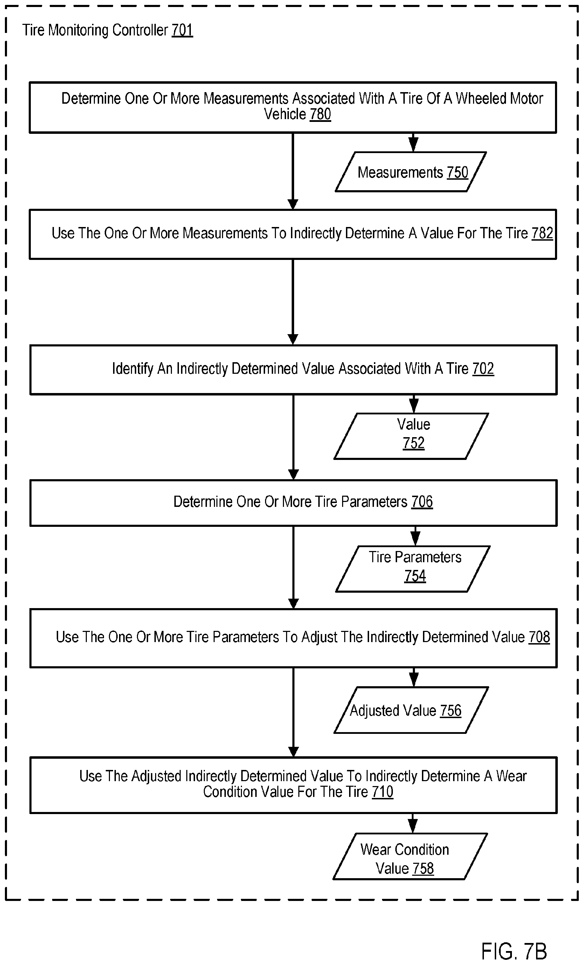

For further explanation, FIG. 7B sets forth a flow chart illustrating an exemplary method of adjustment of indirectly determined values of a tire monitoring system according to embodiments of the present disclosure. The method of FIG. 7B is similar to the method of FIG. 7A in that the method of FIG. 7B includes all of the elements of FIG. 7A. However, the method of FIG. 7B includes additional elements that the tire monitoring controller performs for indirect determination of an indirectly determined value (e.g., an expansion value). Specifically, the method of FIG. 7B includes determining 780, by the tire monitoring controller 701, one or more measurements 750 associated with the tire.

A measurement 750 may be any value useful for inferring, estimating, or otherwise indirectly determining an initial indirectly determined value (e.g., an expansion value) of the tire. Examples of the measurements 750 include but are not limited to a tire pressure measurement, a tire temperature, an outside temperature, an elapsed time from a start of a drive. Continuing with this embodiment, the tire monitoring controller may receive the one or more measurements from one or more components of the vehicle including vehicle sensors, vehicle control systems (VCS), Electronic Control Systems (ECS), and Telematics Control Units (TCU). For example, the tire monitoring controller may request and receive the one or more measurements from one or more components of the vehicle. As another example, the tire monitoring controller may be configured to periodically receive the one or more measurements from the one or more components without having to specifically request the one or more measurements. In another example, the one or more components of the vehicle may store the one or more measurements in a memory or storage system that the tire monitoring controller may access. Determining 780, by the tire monitoring controller 701, one or more measurements 750 associated with the tire may be carried out by selecting from a plurality of measurements the one or more measurements, to use for indirectly determining the expansion value.

In addition, the method of FIG. 7B also includes using 782, by the tire monitoring controller 701, the one or more measurements 750 to indirectly determine the indirectly determined value 752. Using 782 the one or more measurements 750 to indirectly determine a value 752 for the tire may be carried out by applying one or more algorithms or indexes that define a relationship between the one or more measurements and an expansion value. For example, a general rule is that as a tire is inflated from zero pressure, the tire will expand, and its expansion will increase. A tire monitoring controller may utilize an index or algorithm that indicates or generates an expansion value for a given tire pressure and specific of the type of the tire. In a particular embodiment, the one or more measurements may be used in the index or algorithm to indirectly determine an expansion value. Tire temperature, tire pressure, or outside air temperature are examples of other factors that have a general relationship to tire expansion size. For example, the tire monitoring controller may infer an expansion value for the tire based on a combination of tire parameters, such as a temperature measurement, a tire pressure, and the specifics of the type of the tire.

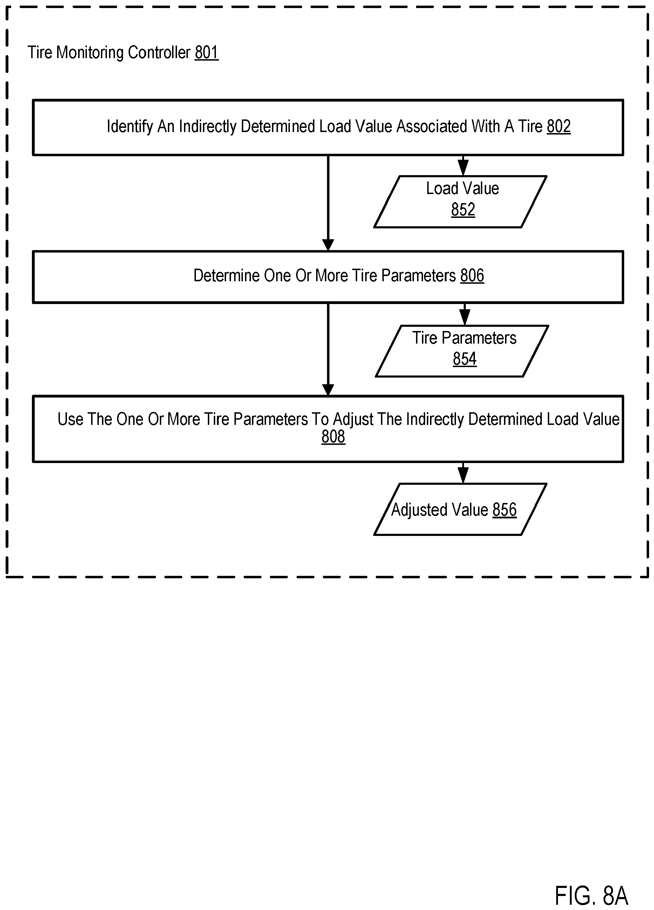

For further explanation, FIG. 8A sets forth a flow chart illustrating an exemplary method of adjustment of indirectly determined values of a tire monitoring system according to embodiments not falling under the scope of the claims. The method of FIG. 8A includes identifying 802, by a tire monitoring controller 801, an indirectly determined load value 852 associated with a tire. As explained above, a tire monitoring controller according to embodiments of the present invention may be implemented in a variety of vehicle components. For example, the tire monitoring controller 801 may be: the example tire monitoring controller 499 within the Vehicle Control System 400 of FIG. 4, the example tire monitoring controller 599 within the Telematics Control Unit 500 of FIG. 5, and the tire monitoring controller 699 within the tire sensor 600 of FIG. 6.

An indirectly determined load value is an estimate, inference, or other indirectly determined indication of the amount of tire compression during loading effects. Identifying 802, by a tire monitoring controller 801, an indirectly determined load value 852 associated with a tire may be carried out by determining an identification for a particular tire; and selecting, from a plurality of indirectly determined load values, an indirectly determined load value having a tag or identification associated with an identification for the particular tire.

In a particular embodiment, the indirectly determined load value may be generated by another vehicle component other than the tire monitoring controller 801. In this embodiment, a tire monitoring controller may receive one or more indirectly determined load values from another vehicle component. For example, a tire monitoring controller in a tire sensor may receive indirectly determined load values generated by a vehicle control system (VCS).

In another embodiment, the indirectly determined load value may be generated by the tire monitoring controller 801. In this embodiment, the tire monitoring controller may indirectly determine a load value and store the indirectly determined load value in a memory or storage location accessible by the tire monitoring controller.

In addition, the method of FIG. 8A also includes identifying 806, by the tire monitoring controller 801, one or more tire parameters 854 from one or more direct measurement devices. A direct measurement device is a device that is configured to directly measure a tire parameter. Tire parameters are values that impact the load value and therefore may be used to compensate an indirect determination of an initial load value. Identifying 806, by the tire monitoring controller 801, one or more tire parameters 854 from the one or more direct measurement devices may be carried out by requesting and receiving one or more tire parameters from one or more components of the vehicle including a tire sensor, vehicle sensors, a VCS, and a TCU. The tire monitoring controller may have access to memory or a storage location that stores the one or more tire parameters. Alternatively, identifying 806, by the tire monitoring controller 801, one or more tire parameters 854 may be carried out by directly measuring one or more of the tire parameters.

The method of FIG. 8A also includes using 808, by the tire monitoring controller 801, the one or more tire parameters 854 to adjust the indirectly determined load value 852. Using 808, by the tire monitoring controller 801, the one or more tire parameters 854 to adjust the indirectly determined load value 852 may be carried out by applying one or more algorithms or indexes that define a relationship between the one or more tire parameters and the initial load value. For example, each tire parameter may have a defined relationship with a load value. An index or algorithm may codify that relationship, such that the tire monitoring controller may adjust a load value based on the tire parameter.

In a particular embodiment, the one or more tire parameters 854 include a tire parameter that is a speed value indicating a measured vehicle speed or rotational speed of the tire. The speed of the tires and the tire stiffness values impact the centrifugal forces acting on the interior of the tire, which impact deformation of the tire under a load. For example, as a tire rotates across a road surface, the tire is subject to centrifugal force. This centrifugal force acts on the tire in a manner such that the tire is "pulled" in a direction that is outwards from the center of the wheel hub (in the radial plane), having a similar effect as an increase in pressure but with a lesser degree of magnitude. This centrifugal force is proportional to the square of the rotational speed of the tire or the square of the linear velocity of the tire or the vehicle. The tire monitoring controller may use an index or algorithm that defines the relationship between speed values, tire stiffness values, and load values. In that respect, the additional input of the speed value may be indicated by a measured vehicle speed or tire rotational speed. For example, tire rotational speed may be measured from either the vehicle wheel speed sensors or measured by a tire sensor (e.g., tire mounted sensor (TMS), valve mounted sensor (VMS), or wheel rim sensor). In this example, the wheel speed sensors or tire sensors may communicate the speed value to a vehicle-based system by radio frequency, Bluetooth low energy (BLE), or other means.

In another embodiment, the one or more tire parameters 854 include a tire stiffness parameter. As explained above, the magnitude of the expansion due to pressure and speed is dependent on a tire's characteristic stiffness. Differences in tire expansion may impact the deformation of the tire under a load. To determine the stiffness coefficients for a given tire model, various loads and pressures can be applied to the tire using a flat track, a drum tester, a static test, or through a simulation or model. The measurements can then be used to solve for the coefficients of the polynomial function. These coefficients are indicative of the relationship between the vertical compression load at an applied pressure and the resultant tire radial displacement or deformation at the ground contact surface. Additionally, these stiffness coefficients are a gauge of the relationship between the centrifugal radial forces subjected on the tire, which are applicable to pressure and speed, and the degree of resulting circumferential expansion. In a particular embodiment, the tire stiffness coefficients may be expressed as one or more tire stiffness parameters. The tire stiffness parameters may be stored in various locations (e.g., cloud, vehicle ECU, or tire sensor) for access by the tire monitoring controller. The tire monitoring controller may use an index or algorithm that defines the relationship between tire coefficient parameters and load values to adjust the load values.

In another embodiment, the one or more tire parameters 854 include a contact patch length (CPL) measurement associated with a length of the tire contact patch with the road surface. A tire sensor may generate a CPL measurement by using a radial acceleration or tangential acceleration (x plane) measurement. In this example, the tire sensor may generate a radial acceleration measurement using an accelerometer, an acceleration sensor, an accelerometric device, a shock sensor, a force sensor, a microelectromechanical systems (MEMs) sensor, or other devices that are similarly responsive to acceleration magnitude and/or to changes in acceleration. For example, an accelerometer senses acceleration in the radial plane (z-plane) (see FIG. 3). The characteristic of the accelerometric waveform exhibits a centrifugal offset and region where the magnitude momentarily drops to zero during the time when the zone where the sensor is mounted is at tire/ground contact position. That is, CPL may be calculated by measuring the time at which the radial acceleration is returning to and is at zero g. This measurement is repeated for rotations of the tire. The radial acceleration signal may then be conditioned to make processing easier by isolating each strike in the acceleration profile, low-pass filtering the waveform, inverting the waveform, and normalizing the waveform for speed. CPL measurements may be influenced by tire load and pressure, and, accordingly, tires may be characterized by comparing the magnitude of CPL with varying pressure and load. Characteristic equations may be stored, for example, in the TMS (105) of FIG. 1 or in the vehicle control unit (107) of FIG. 1.

In another embodiment, the one or more tire parameters 854 include a peak radial displacement (PRD) measurement associated with a peak magnitude of radial deformation at the tire contact patch. As with CPL measurements, a tire sensor may generate a PRD measurement by using a radial acceleration measurement. In a particular embodiment, the tire sensor determines the PRD by integrating the radial accelerometric signal twice with respect to time. Both CPL and PRD are influenced by tire load and pressure, and, accordingly, tires may be characterized by comparing the magnitude of CPL or PRD with varying pressure and load. Characteristic equations may be stored, for example, in the TMS or in a vehicle control unit.

In another embodiment, the one or more tire parameters 854 include a determination of tire load. The determination of tire load may be value that is calculated by some vehicle component (e.g., tire sensor, vehicle sensor, VCS, TCU) using a tire pressure value and a CPL measurement or a PRD measurement. For example, a tire monitoring controller may determine the load for a tire using a stored characteristic equation for determining load based on the CPL/PRD and other factors, such as tire pressure, tire speed, tire temperature, etc. Using a load determination based on PRD or CPL to adjust an initial load value may increase the accuracy of the final adjusted load value.

In a particular embodiment, the tire monitoring controller may use a plurality of tire parameters (e.g., speed values, tire stiffness parameters, contact path length, peak radial deformation, load as determined by CPL/PRD) to adjust the initial load value.

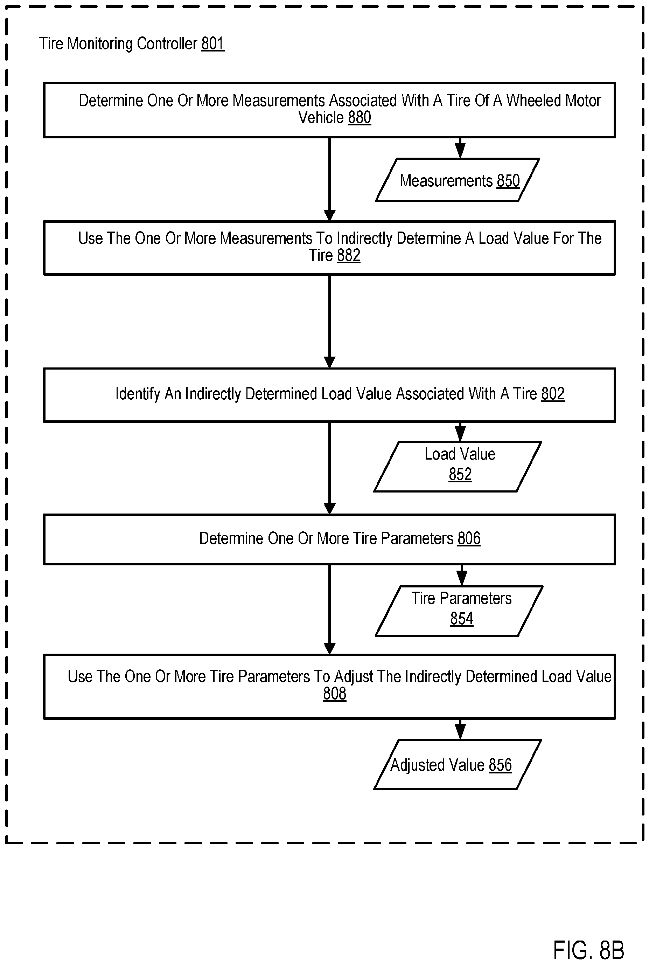

For further explanation, FIG. 8B sets forth a flow chart illustrating an exemplary method of adjustment of indirectly determined values of a tire monitoring system according to embodiments not falling under the scope of the claims. The method of FIG. 8B is similar to the method of FIG. 8A in that the method of FIG. 8B includes all of the elements of FIG. 8A. However, the method of FIG. 8B includes additional elements that the tire monitoring controller performs for indirect determination of a load value. Specifically, the method of FIG. 8B includes determining 880, by the tire monitoring controller 801, one or more measurements 850 associated with the tire.

A measurement 850 may be any value useful for inferring, estimating, or otherwise indirectly determining an initial load value of the tire. Examples of the measurements 850 include but are not limited to height of tires or axels (axle height sensors) and a tire pressure measurement. Continuing with this embodiment, the tire monitoring controller may receive the one or more measurements from one or more components of the vehicle including vehicle sensors, vehicle control systems (VCS), Electronic Control Systems (ECS), and Telematics Control Units (TCU). For example, the tire monitoring controller may request and receive the one or more measurements from one or more components of the vehicle. As another example, the tire monitoring controller may be configured to periodically receive the one or more measurements from the one or more components without having to specifically request the one or more measurements. In another example, the one or more components of the vehicle may store the one or more measurements in a memory or storage system that the tire monitoring controller may access. Determining 880, by the tire monitoring controller 801, one or more measurements 850 associated with the tire may be carried out by selecting from a plurality of measurements, the one or more measurements, to use for indirectly determining the load value.

In addition, the method of FIG. 8B also includes using 882, by the tire monitoring controller 801, the one or more measurements 850 to indirectly determine the load value 852. Using 882 the one or more measurements 850 to indirectly determine a load value 852 for the tire may be carried out by applying one or more algorithms or indexes that define a relationship between the one or more measurements and a load value. For example, a general rule is that as the load on the tires is increased, the height of the axel or tires will decrease. An index or algorithm may define this relationship between a particular measurement (e.g., axle height or tire pressure) and the load value. A tire monitoring controller may utilize an index or algorithm that indicates or generates a load value based on the axel/tire height, tire pressure, and the specific of the type of the tire.

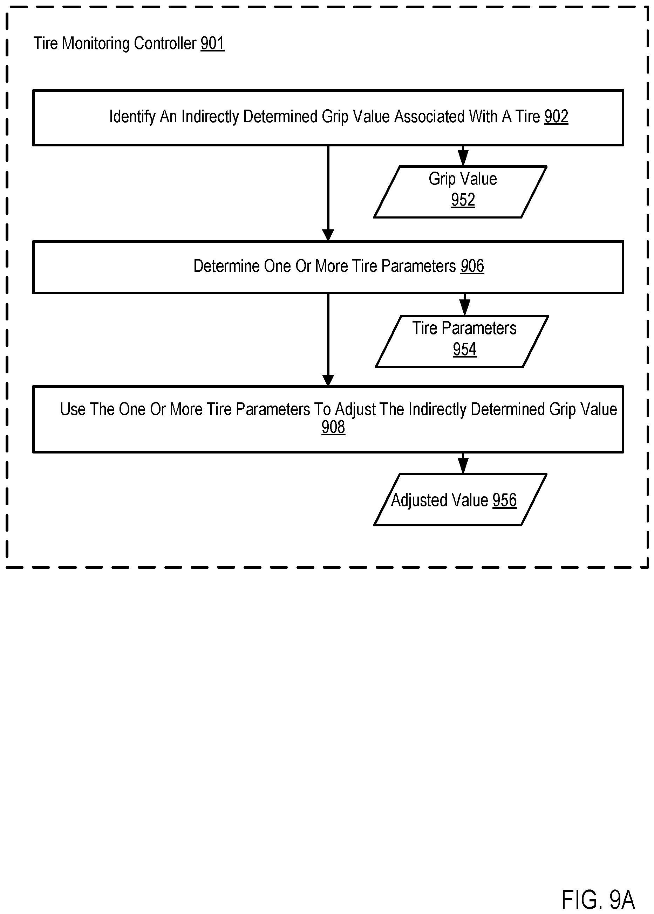

For further explanation, FIG. 9A sets forth a flow chart illustrating an exemplary method of adjustment of indirectly determined values of a tire monitoring controller according to embodiments not falling under the scope of the claims. The method of FIG. 9A includes identifying 902, by a tire monitoring controller 901, an indirectly determined grip value 952 associated with a tire. As explained above, a tire monitoring controller according to embodiments of the present invention may be implemented in a variety of vehicle components. For example, the tire monitoring controller 901 may be the example tire monitoring controller 499 within the Vehicle Control System 400 of FIG. 4, the example tire monitoring controller 599 within the Telematics Control Unit 500 of FIG. 5, and the tire monitoring controller 699 within the tire sensor 600 of FIG. 6.

An indirectly determined grip value is an estimate, inference, or other indirectly determined indication of the amount of grip for a tire. Identifying 902, by a tire monitoring controller 901, an indirectly determined grip value 952 associated with a tire may be carried out by determining an identification for a particular tire; and selecting, from a plurality of indirectly determined grip values, an indirectly determined grip value having a tag or identification associated with an identification for the particular tire.

In a particular embodiment, the indirectly determined grip value may be generated by another vehicle component other than the tire monitoring controller 901. In this embodiment, a tire monitoring controller may receive one or more indirectly determined grip values from another vehicle component. For example, a tire monitoring controller in a tire sensor may receive indirectly determined grip values generated by a vehicle control system (VCS).

In another embodiment, the indirectly determined grip value may be generated by the tire monitoring controller 901. In this embodiment, the tire monitoring controller may indirectly determine a grip value and store the indirectly determined grip value in a memory or storage location accessible by the tire monitoring controller.

The method of FIG. 9A also includes identifying 906, by the tire monitoring controller 901, one or more tire parameters 954 from one or more direct measurement devices. A direct measurement device is a device that is configured to directly measure a tire parameter. Tire parameters are values that impact the grip of the tire and therefore may be used to compensate an indirect determination of an initial grip value of the tire. Identifying 906, by the tire monitoring controller 901, one or more tire parameters 954 may also be carried out by requesting and receiving one or more tire parameters from one or more components of the vehicle including a tire sensor, vehicle sensors, a VCS, and a TCU. The tire monitoring controller may have access to memory or a storage location that stores the one or more tire parameters. Alternatively, identifying 906, by the tire monitoring controller 901, one or more tire parameters 954 may be carried out by directly measuring one or more of the tire parameters.

Furthermore, the method of FIG. 9A includes using 908, by the tire monitoring controller 901, the one or more tire parameters 954 to adjust the indirectly determined grip value 952. Using 908, by the tire monitoring controller 901, the one or more tire parameters 954 to adjust the indirectly determined grip value 952 may be carried out by applying one or more algorithms or indexes that define a relationship between the one or more tire parameters and a grip value. For example, each tire parameter may have a defined relationship with a grip value. An index or algorithm may codify that relationship, such that the tire monitoring controller may adjust a grip value based on the tire parameter.

In a particular embodiment, the grip of a tire may correspond to the load placed on the tire. As a result, the tire parameters (e.g., speed values, tire stiffness parameters, CPL, PRD, load as determined by CPL/PRD) that impact a load value may be used as additional inputs into a tire monitoring controller to adjust an initial grip value.

In a particular embodiment, the one or more tire parameters 954 include a tire parameter that is a speed value indicating a measured vehicle speed or rotational speed of the tire. The speed of the tires impacts the centrifugal forces acting on the interior of the tire, which impact deformation of the tire under a load. For example, as a tire rotates across a road surface, the tire is subject to centrifugal force. This centrifugal force acts on the tire in a manner such that the tire is "pulled" in a direction that is outwards from the center of the wheel hub (in the radial plane), having a similar effect as an increase in pressure but with a lesser degree of magnitude. This centrifugal force is proportional to the square of the rotational speed of the tire or the square of the linear velocity of the tire or the vehicle. The tire monitoring controller may use an index or algorithm that defines the relationship between speed values and grip values. In that respect, the additional input of the speed value may be indicated by a measured vehicle speed or tire rotational speed. For example, tire rotational speed may be measured from either the vehicle wheel speed sensors or measured by a tire sensor (e.g., tire mounted sensor (TMS), valve mounted sensor (VMS), or wheel rim sensor). In this example, the wheel speed sensors or tire sensors may communicate the speed value to a vehicle-based system by radio frequency, Bluetooth low energy (BLE), or other means.

In another embodiment, the one or more tire parameters 954 include a tire stiffness parameter. As explained above, the magnitude of the expansion due to pressure and speed is dependent on a tire's characteristic stiffness. Differences in tire expansion may impact the deformation of the tire under a load. To determine the stiffness coefficients for a given tire model, various loads and pressures can be applied to the tire using a flat track, a drum tester, a static test, or through a simulation or model. The measurements can then be used to solve for the coefficients of the polynomial function. These coefficients are indicative of the relationship between the vertical compression load at an applied pressure and the resultant tire radial displacement or deformation at the ground contact surface. Additionally, these stiffness coefficients are a gauge of the relationship between the centrifugal radial forces subjected on the tire, which are applicable to pressure and speed, and the degree of resulting circumferential expansion. In a particular embodiment, the tire stiffness coefficients may be expressed as one or more tire stiffness parameters. The tire stiffness parameters may be stored in various locations (e.g., cloud, vehicle ECU, or tire sensor) for access by the tire monitoring controller. The tire monitoring controller may use an index or algorithm that defines the relationship between tire coefficient parameters and grip to adjust the initial grip values.

In another embodiment, the one or more tire parameters 954 include a contact patch length (CPL) measurement associated with a length of the tire contact patch with the road surface. As explained above, a CPL measurement may provide an indication of the load on the tires and the grip of the tires is largely dependent on the tire load. As such, using a CPL measurement to adjust an initial grip value may increase the accuracy of the final adjusted grip value.

In another embodiment, the one or more tire parameters 954 include a peak radial displacement (PRD) measurement associated with a peak magnitude of radial deformation at the tire contact patch. As with CPL measurements, a PRD measurement may provide an indication of the load on the tires and the grip of the tires is largely dependent on the tire load. As such, using a PRD measurement to adjust an initial grip value may increase the accuracy of the final adjusted grip value.

In another embodiment, the one or more tire parameters 954 include a determination of tire load. The determination of tire load may be value that is calculated by some vehicle component (e.g., tire sensor, vehicle sensor, VCS, TCU) using a tire pressure value and a CPL measurement or a PRD measurement. As explained above, the grip of a tire is largely dependent on the tire load. As such, using a load determination based on PRD or CPL to adjust an initial grip value may increase the accuracy of the final adjusted grip value.

In a particular embodiment, the tire monitoring controller may use a plurality of tire parameters (e.g., speed values, tire stiffness parameters, contact path length, peak radial deformation, load as determined by CPL/PRD) to adjust the initial grip value.

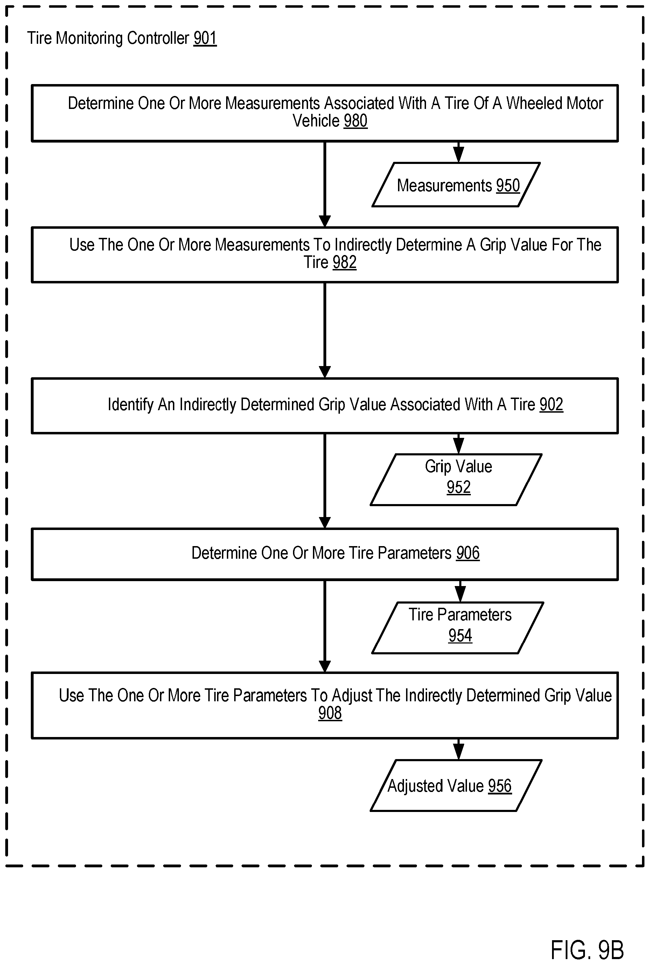

For further explanation, FIG. 9B sets forth a flow chart illustrating an exemplary method of adjustment of indirectly determined values of a tire monitoring system according to embodiments not falling under the scope of the claims. The method of FIG. 9B is similar to the method of FIG. 9A in that the method of FIG. 9B includes all of the elements of FIG. 9A. However, the method of FIG. 9B includes additional elements that the tire monitoring controller performs for indirect determination of a grip value. Specifically, the method of FIG. 9B includes determining 980, by the tire monitoring controller 901, one or more measurements 950 associated with the tire.

A measurement 950 may be any value useful for inferring, estimating, or otherwise indirectly determining an initial grip value of the tire or evaluating the degree of tire slip. Examples of the one or more measurements 950 include but are not limited to an analysis of wheel rotational speed, acceleration, or jerk based on information derived by signals from the vehicle wheel speed sensors. Continuing with this embodiment, the tire monitoring controller may receive the one or more measurements from one or more components of the vehicle including vehicle sensors, vehicle control systems (VCS), Electronic Control Systems (ECS), and Telematics Control Units (TCU). For example, the tire monitoring controller may request and receive the one or more measurements from one or more components of the vehicle. As another example, the tire monitoring controller may be configured to periodically receive the one or more measurements from the one or more components without having to specifically request the one or more measurements. In another example, the one or more components of the vehicle may store the one or more measurements in a memory or storage system that the tire monitoring controller may access. Determining 980, by the tire monitoring controller 901, one or more measurements 950 associated with the tire may be carried out by selecting from a plurality of measurements, the one or more measurements, to use for indirectly determining the grip value.

In addition, the method of FIG. 9B also includes using 982, by the tire monitoring controller 901, the one or more measurements 950 to indirectly determine the grip value 952. Using 982 the one or more measurements 950 to indirectly determine a grip value 952 for the tire may be carried out by applying one or more algorithms or indexes that define a relationship between the one or more measurements and a grip value. For example, a general rule is that the amount of wheel rotation speed increases without an increase in vehicle speed, the amount of grip decreases. A tire monitoring controller may utilize an index or algorithm that indicates or generates a grip value for a given type of tire based on the degree of tire slip indicated by the one or more measurements.

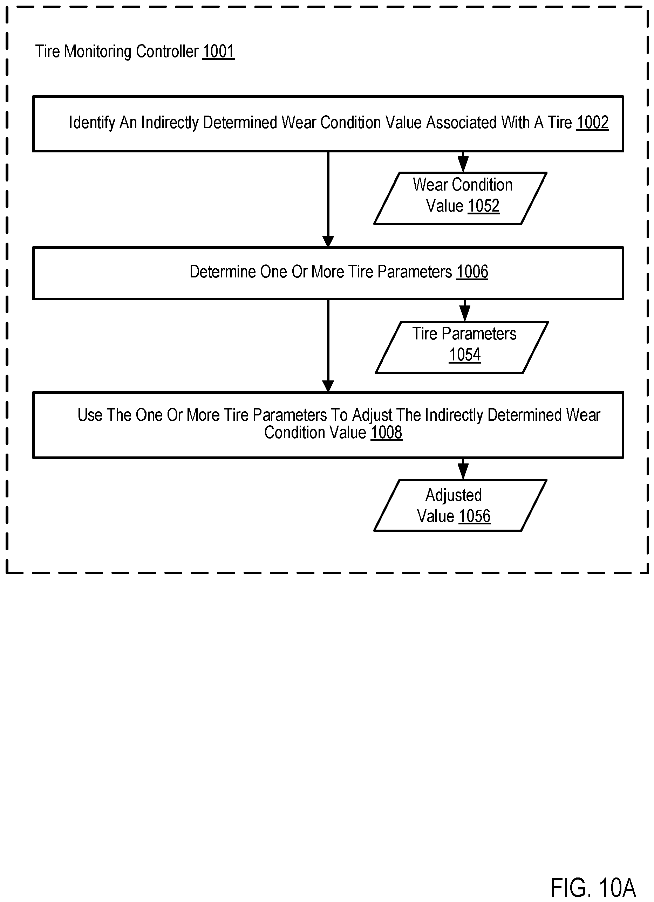

For further explanation, FIG. 10A sets forth a flow chart illustrating an exemplary method of adjustment of indirectly determined values of a tire monitoring system according to embodiments of the present disclosure. The method of FIG. 10A includes identifying 1002, by a tire monitoring controller 1001, an indirectly determined wear condition value 1052 associated with a tire. As explained above, a tire monitoring controller according to embodiments of the present invention may be implemented in a variety of vehicle components. For example, the tire monitoring controller 1001 may be the example tire monitoring controller 499 within the Vehicle Control System 400 of FIG. 4, the example tire monitoring controller 599 within the Telematics Control Unit 500 of FIG. 5, and the tire monitoring controller 699 within the tire sensor 600 of FIG. 6.

An indirectly determined wear condition value is an estimate, inference, or other indirectly determined indications of use of a tire. Examples of wear condition values include but are not limited to indications of tread depth and tread wear. Identifying 1002, by a tire monitoring controller 901, an indirectly determined wear condition value 1052 associated with a tire may be carried out by determining an identification for a particular tire; and selecting, from a plurality of indirectly determined wear condition values, an indirectly determined wear condition value having a tag or identification associated with an identification for the particular tire.

In a particular embodiment, the indirectly determined wear condition value may be generated by another vehicle component other than the tire monitoring controller 1001. In this embodiment, a tire monitoring controller may receive one or more indirectly determined wear condition values from another vehicle component. For example, a tire monitoring controller in a tire sensor may receive indirectly determined wear condition values generated by a vehicle control system (VCS).

In another embodiment, the indirectly determined wear condition value may be generated by the tire monitoring controller 1001. In this embodiment, the tire monitoring controller may indirectly determine a wear condition value and store the indirectly determined wear condition value in a memory or storage location accessible by the tire monitoring controller.

The method of FIG. 10A includes identifying 1006, by the tire monitoring controller 1001, one or more tire parameters 1054 from one or more direct measurement devices. A direct measurement device is a device that is configured to directly measure a tire parameter. Tire parameters are values that impact the wear condition of the tire and therefore may be used to compensate/adjust an indirect determination of an initial wear condition value for the tire. Identifying 1006, by the tire monitoring controller 1001, one or more tire parameters 1054 may be carried out by requesting and receiving one or more tire parameters from one or more components of the vehicle including a tire sensor, vehicle sensors, a VCS, a TCU. The tire monitoring controller may have access to memory or a storage location that stores the one or more tire parameters. Alternatively, identifying 1006, by the tire monitoring controller 1001, one or more tire parameters 1054 may be carried out by directly measuring one or more of the tire parameters.

Furthermore, the method of FIG. 10A includes using 1008, by the tire monitoring controller 1001, the one or more tire parameters 1054 to adjust the indirectly determined wear condition value 1052 for the tire. Using 1008, by the tire monitoring controller 1001, the one or more tire parameters 1054 to adjust the indirectly determined wear condition value 1052 for the tire may be carried out by applying one or more algorithms or indexes that define a relationship between the one or more tire parameters and a wear condition value. For example, each tire parameter may have a defined relationship with a wear condition value. An index or algorithm may codify that relationship, such that the tire monitoring controller may adjust a wear condition value based on the tire parameter.

In a particular embodiment, the wear of a tire may correspond to the load placed on the tire. The general principle being that a higher degree of tire wear is associated with higher load operating conditions. As a result, the tire parameters (e.g., speed values, tire stiffness parameters, CPL, PRD, load as determined by CPL/PRD) that impact a load value may be used as additional inputs into a tire monitoring controller to adjust an initial wear condition value.

In a particular embodiment, the one or more tire parameters 1054 include a tire parameter that is a speed value indicating a measured vehicle speed or rotational speed of the tire. The speed of the tires impacts the centrifugal forces acting on the interior of the tire, which impact deformation of the tire under a load. For example, as a tire rotates across a road surface, the tire is subject to centrifugal force. This centrifugal force acts on the tire in a manner such that the tire is "pulled" in a direction that is outwards from the center of the wheel hub (in the radial plane), having a similar effect as an increase in pressure but with a lesser degree of magnitude. This centrifugal force is proportional to the square of the rotational speed of the tire or the square of the linear velocity of the tire or the vehicle. The tire monitoring controller may use an index or algorithm that defines the relationship between speed values and wear condition values. In that respect, the additional input of the speed value may be indicated by a measured vehicle speed or tire rotational speed. For example, tire rotational speed may be measured from either the vehicle wheel speed sensors or measured by a tire sensor (e.g., tire mounted sensor (TMS), valve mounted sensor (VMS), or wheel rim sensor). In this example, the wheel speed sensors or tire sensors may communicate the speed value to a vehicle-based system by radio frequency, Bluetooth low energy (BLE), or other means.

In another embodiment, the one or more tire parameters 1054 include a tire stiffness parameter. As explained above, the magnitude of the expansion due to pressure and speed is dependent on a tire's characteristic stiffness. Differences in tire expansion may impact the deformation of the tire under a load. To determine the stiffness coefficients for a given tire model, various loads and pressures can be applied to the tire using a flat track, a drum tester, a static test, or through a simulation or model. The measurements can then be used to solve for the coefficients of the polynomial function. These coefficients are indicative of the relationship between the vertical compression load at an applied pressure and the resultant tire radial displacement or deformation at the ground contact surface. Additionally, these stiffness coefficients are a gauge of the relationship between the centrifugal radial forces subjected on the tire, which are applicable to pressure and speed, and the degree of resulting circumferential expansion. In a particular embodiment, the tire stiffness coefficients may be expressed as one or more tire stiffness parameters. The tire stiffness parameters may be stored in various locations (e.g., cloud, vehicle ECU, or tire sensor) for access by the tire monitoring system. The tire monitoring system may use an index or algorithm that defines the relationship between tire coefficient parameters and wear to adjust the initial wear condition values.

In another embodiment, the one or more tire parameters 1054 include a contact patch length (CPL) measurement associated with a length of the tire contact patch with the road surface. As explained above, a CPL measurement may provide an indication of the load on the tires and the wear of the tires is largely dependent on the tire load. As such, using a CPL measurement to adjust an initial wear condition value may increase the accuracy of the final adjusted wear condition value.

In another embodiment, the one or more tire parameters 1054 include a peak radial displacement (PRD) measurement associated with a peak magnitude of radial deformation at the tire contact patch. As with CPL measurements, a PRD measurement may provide an indication of the load on the tires and the grip of the tires is largely dependent on the tire load. As such, using a PRD measurement to adjust an initial wear condition value may increase the accuracy of the final adjusted wear condition value.

In another embodiment, the one or more tire parameters 954 include a determination of tire load. The determination of tire load may be value that is calculated by some vehicle component (e.g., tire sensor, vehicle sensor, VCS, TCU) using a tire pressure value and a CPL measurement or a PRD measurement. As explained above, the wear of a tire is largely dependent on the tire load. As such, using a load determination based on PRD or CPL to adjust an initial wear condition value may increase the accuracy of the final adjusted wear condition value.

In a particular embodiment, the tire monitoring controller may use a plurality of tire parameters (e.g., speed values, tire stiffness parameters, contact path length, peak radial deformation, load as determined by CPL/PRD) to adjust the initial wear condition value.

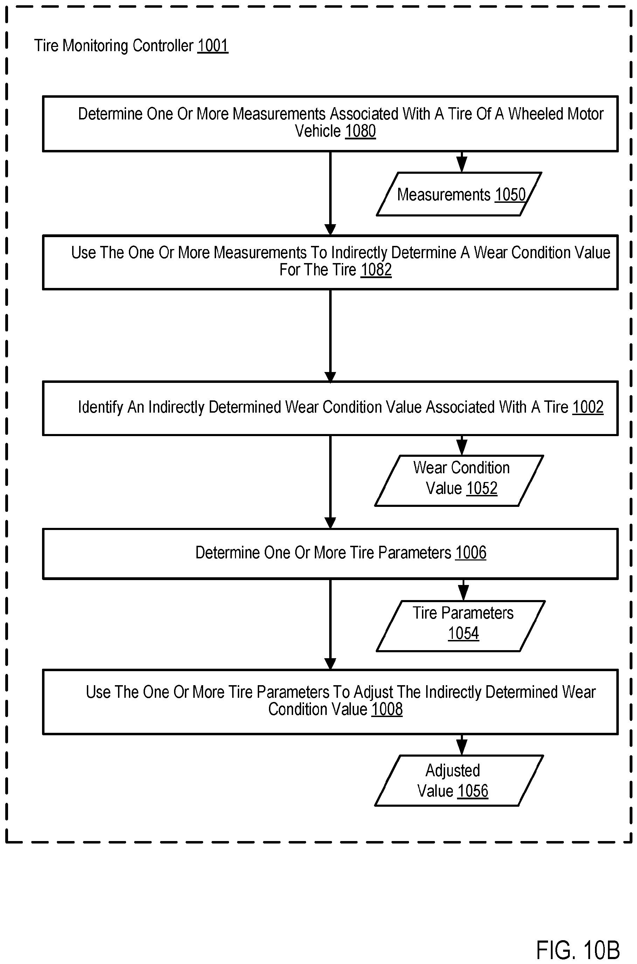

For further explanation, FIG. 10B sets forth a flow chart illustrating an exemplary method of adjustment of indirectly determined values of a tire monitoring system according to embodiments of the present disclosure. The method of FIG. 10B is similar to the method of FIG. 10A in that the method of FIG. 10B includes all of the elements of FIG. 10A. However, the method of FIG. 10B includes additional elements that the tire monitoring controller performs for indirect determination of a wear condition value. Specifically, the method of FIG. 10B includes determining 1080, by the tire monitoring controller 1001, one or more measurements 1050 associated with the tire.

A measurement 1050 may be any value useful for inferring, estimating, or otherwise indirectly determining an initial wear condition value of the tire or evaluating the degree of tire slip. Examples of the one or more measurements 1050 include but are not limited to distance that the tires were driven from last tire change; average speed that the tires are driven; magnitude and frequency of hard braking; average tire pressure; tire pressure measurements; tire temperature; average outside temperature; and other factors or measurements that may occur to those of ordinary skill in the art. Continuing with this embodiment, the tire monitoring controller may receive the one or more measurements from one or more components of the vehicle including vehicle sensors, vehicle control systems (VCS), Electronic Control Systems (ECS), and Telematics Control Units (TCU). For example, the tire monitoring controller may request and receive the one or more measurements from one or more components of the vehicle. As another example, the tire monitoring controller may be configured to periodically receive the one or more measurements from the one or more components without having to specifically request the one or more measurements. In another example, the one or more components of the vehicle may store the one or more measurements in a memory or storage system that the tire monitoring controller may access. Determining 1080, by the tire monitoring controller 1001, one or more measurements 1050 associated with the tire may be carried out by selecting from a plurality of measurements, the one or more measurements, to use for indirectly determining the wear condition value.

In addition, the method of FIG. 10B also includes using 1082, by the tire monitoring controller 1001, the one or more measurements 1050 to indirectly determine the wear condition value 1052. Using 1082 the one or more measurements 1050 to indirectly determine a wear condition value 1052 for the tire may be carried out by applying one or more algorithms or indexes that define a relationship between the one or more measurements and wear condition value. For example, a general rule is that as the distance that a tire is driven is increased, the amount of wear on the tires is increased and the tread depth of the tires is decreased. A tire monitoring controller may utilize an index or algorithm that indicates or generates a wear condition value based on the specific of the type of tire and the measurement value. In this example, the tire monitoring controller may infer a wear condition value measurement for the tire based on tire parameters, such as a temperature measurement, a tire pressure, and the specifics of the type of the tire.

Exemplary embodiments of the present invention are described largely in the context of a fully functional computer system for adjustment of indirectly determined values of a tire monitoring system. Readers of skill in the art will recognize, however, that the present invention also may be embodied in a computer program product disposed upon computer readable storage media for use with any suitable data processing system. Such computer readable storage media may be any storage medium for machine-readable information, including magnetic media, optical media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps of the method of the invention as embodied in a computer program product. Persons skilled in the art will recognize also that, although some of the exemplary embodiments described in this specification are oriented to software installed and executing on computer hardware, nevertheless, alternative embodiments implemented as firmware or as hardware are well within the scope of the present invention.

The present invention may be a system, an apparatus, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatuses, or other devices to cause a series of operational steps to be performed on the computer, other programmable apparatuses or other devices to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, apparatuses, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

According to the present invention, there is provided a method for adjustment of indirectly determined values of a tire monitoring system as set out in the independent claims. Embodiments are set out in the dependent claims.

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible.

## Claims

1. A method for adjustment of indirectly determined values of a tire monitoring system, the method comprising:
identifying (702), by a tire monitoring controller (701), an indirectly determined value (752) associated with a tire, wherein the indirectly determined value (752) is a circumferential expansion value indirectly determined from a tire pressure measurement;
identifying by determining (706), by the tire monitoring controller (701), one or more tire parameters (754) from one or more direct measurement devices, wherein the one or more tire parameters (754) include a tire stiffness parameter;
using (708), by the tire monitoring controller (701), the one or more tire parameters (754) from the one or more direct measurement devices to adjust the indirectly determined value (752); and
using (710), by the tire monitoring controller (701), the adjusted indirectly determined value (756) to indirectly determine a wear condition value (758) for the tire.

2. The method of claim 1, wherein the one or more tire parameters include a distance traveled by the tire.

3. The method of claim 1, wherein the one or more tire parameters include a speed value associated with the tire.

4. The method of claim 3, wherein the speed value is an indication of a GPS vehicle speed.

5. The method of claim 3, wherein the speed value is an indication of a rotational speed of the tire.

6. The method of claim 1, wherein the wear condition value is an indication of tread depth of the tire.

7. The method of claim 1, wherein the wear condition value is an indication of tread wear of the tire.

8. A method of adjustment of indirectly determined values of a tire monitoring system, the method comprising:
identifying (1002), by a tire monitoring controller (1001), an indirectly determined wear condition value (1052) associated with a tire by receiving the indirectly determined wear condition value (1052) from another vehicle component than the tire monitoring controller (1001);
identifying by determining (1006), by the tire monitoring controller (1001), one or more tire parameters (1054) from one or more direct measurement devices, wherein the one or more tire parameters (1054) include a tire stiffness parameter; and
using (1008), by the tire monitoring controller (1001), the one or more tire parameters (1054) from the one or more direct measurement devices to adjust the indirectly determined wear condition value (1056) for the tire.

9. The method of claim 8, wherein the one or more parameters include a contact patch length measurement.

10. The method of claim 8, wherein the one or more parameters include a peak radial displacement measurement.

11. The method of claim 8, wherein the one or more parameters include a determination of tire load based at least on one of a contact patch length measurement and a peak radial displacement measurement.

12. The method of claim 8, wherein the one or more measurements include a speed value associated with the tire.

13. The method of claim 8, wherein the wear condition value is an indication of tread depth of the tire.

14. The method of claim 8, wherein the wear condition value is an indication of tread wear of the tire.

## Patentansprüche

1. Verfahren zum Einstellen von indirekt ermittelten Werten eines Reifenüberwachungssystems, wobei das Verfahren umfasst:
Identifizieren (702) eines einem Reifen zugeordneten, indirekt bestimmten Werts (752) mittels einer Reifenüberwachungssteuerung (701), wobei der indirekt ermittelte Wert (752) ein Umfangsausdehnungswert ist, der indirekt aus einer Reifendruckmessung bestimmt wird;
Identifizieren durch Bestimmen eines oder mehrerer Reifenparameter (754) von einer oder mehreren direkten Messgeräten durch die Reifenüberwachungssteuerung (701), wobei der eine oder mehrere Reifenparameter (754) einen Reifensteifigkeitsparameter enthalten;
Verwenden (708) des einen oder der mehreren Reifenparameter (754) von dem einen oder den mehreren direkten Messgeräten durch die Reifenüberwachungssteuerung (701) zur Einstellung des indirekt ermittelten Wertes (752); und
Verwenden (710) des eingestellten indirekt ermittelten Wertes (756) durch die Reifenüberwachungssteuerung (701) zum indirekten Bestimmen eines Verschleißzustandswerts (758) für den Reifen.

2. Verfahren nach Anspruch 1, wobei der eine oder die mehreren Reifenparameter eine von dem Reifen zurückgelegte Strecke enthalten.

3. Verfahren nach Anspruch 1, wobei der eine oder die mehreren Reifenparameter einen dem Reifen zugeordneten Geschwindigkeitswert enthalten.

4. Verfahren nach Anspruch 3, wobei der Geschwindigkeitswert ein Hinweis auf eine GPS-Fahrzeuggeschwindigkeit ist.

5. Verfahren nach Anspruch 3, wobei der Geschwindigkeitswert ein Hinweis auf eine Rotationsgeschwindigkeit des Reifens ist.

6. Verfahren nach Anspruch 1, wobei der Verschleißzustandswert ein Hinweis auf die Profiltiefe des Reifens ist.

7. Verfahren nach Anspruch 1, wobei der Verschleißzustandswert ein Hinweis auf den Profilverschleiß des Reifens ist.

8. Verfahren zur Einstellung von indirekt ermittelten Werten eines Reifenüberwachungssystems, wobei das Verfahren umfasst:
Identifizieren (1002) eines einem Reifen zugeordneten indirekt bestimmten Verschleißzustandswerts (1052) mittels einer Reifenüberwachungssteuerung (1001) durch Empfangen des indirekt ermittelten Verschleißzustandswerts (1052) von einer von der Reifenüberwachungssteuerung (1001) verschiedenen Fahrzeugkomponente;
Identifizieren durch Bestimmen (1006) eines oder mehrerer Reifenparameter (1054) von einer oder mehreren direkten Messgeräten mittels der Reifenüberwachungssteuerung (1001), wobei der eine oder die mehreren Reifenparameter (1054) einen Reifensteifigkeitsparameter enthalten; und
Verwenden (1008) des einen oder der mehreren Reifenparameter (1054) von dem einen oder den mehreren direkten Messgeräten durch die Reifenüberwachungssteuerung (1001) zur Einstellung des indirekt ermittelten Verschleißzustandswertes (1056) für den Reifen.

9. Verfahren nach Anspruch 8, wobei der eine oder die mehreren Parameter eine Kontaktflächenlängenmessung umfassen.

10. Verfahren nach Anspruch 8, wobei der eine oder die mehreren Parameter eine radiale Spitzenverschiebungsmessung umfassen.

11. Verfahren nach Anspruch 8, wobei der eine oder die mehreren Parameter eine Bestimmung der Reifenbelastung umfassen, die auf mindestens einer Kontaktflächenlängenmessung und einer Spitzenradialverschiebungsmessung basiert.

12. Verfahren nach Anspruch 8, wobei die eine oder mehreren Messungen einen dem Reifen zugeordneten Geschwindigkeitswert enthalten.

13. Verfahren nach Anspruch 8, wobei der Verschleißzustandswert ein Hinweis auf die Profiltiefe des Reifens ist.

14. Verfahren nach Anspruch 8, wobei der Verschleißzustandswert ein Hinweis auf den Profilverschleiß des Reifens ist.

## Revendications

1. Procédé d'ajustement de valeurs déterminées indirectement d'un système de surveillance de pneus, le procédé consistant à :
identifier (702), par un contrôleur de surveillance de pneus (701), une valeur déterminée indirectement (752) et associée à un pneu, dans lequel la valeur déterminée indirectement (752) est une valeur d'expansion circonférentielle qui est déterminée indirectement à partir d'une mesure de pression de pneu ;
identifier en déterminant (706), par le contrôleur de surveillance de pneus (701), un ou plusieurs paramètres de pneu (754) à partir d'un ou plusieurs dispositifs de mesure directe, dans lequel lesdits un ou plusieurs paramètres de pneu (754) incluent un paramètre de rigidité de pneu ;
utiliser (708), par le contrôleur de surveillance de pneus (701), lesdits un ou plusieurs paramètres de pneu (754) à partir desdits un ou plusieurs dispositifs de mesure directe pour ajuster la valeur déterminée indirectement (752) ; et
utiliser (710), par le contrôleur de surveillance de pneus (701), la valeur déterminée indirectement et ajustée (756) pour déterminer indirectement une valeur de l'état d'usure (758) du pneu.

2. Procédé selon la revendication 1, dans lequel lesdits un ou plusieurs paramètres de pneu incluent une distance parcourue par le pneu.

3. Procédé selon la revendication 1, dans lequel lesdits un ou plusieurs paramètres de pneu incluent une valeur de vitesse associée au pneu.

4. Procédé selon la revendication 3, dans lequel la valeur de vitesse est une indication d'une vitesse d'un véhicule avec GPS.

5. Procédé selon la revendication 3, dans lequel la valeur de vitesse est une indication d'une vitesse de rotation du pneu.

6. Procédé selon la revendication 1, dans lequel la valeur de l'état d'usure est une indication de la profondeur de la bande de roulement du pneu.

7. Procédé selon la revendication 1, dans lequel la valeur de l'état d'usure est une indication de l'usure de la bande de roulement du pneu.

8. Procédé d'ajustement de valeurs déterminées indirectement d'un système de surveillance de pneus, le procédé consistant à :
identifier (1002), par un contrôleur de surveillance de pneus (1001), une valeur déterminée indirectement de l'état d'usure (1052) et associée à un pneu, en recevant la valeur déterminée indirectement de l'état d'usure (1052) de la part d'un composant de véhicule autre que le contrôleur de surveillance de pneus (1001) ;
identifier en déterminant (1006), par le contrôleur de surveillance de pneus (1001), un ou plusieurs paramètres de pneu (1054) à partir d'un ou plusieurs dispositifs de mesure directe, dans lequel lesdits un ou plusieurs paramètres de pneu (1054) incluent un paramètre de rigidité de pneu ; et
utiliser (1008), par le contrôleur de surveillance de pneus (1001), lesdits un ou plusieurs paramètres de pneu (1054) à partir desdits un ou plusieurs dispositifs de mesure directe pour ajuster la valeur déterminée indirectement de l'état d'usure (1056) du pneu.

9. Procédé selon la revendication 8, dans lequel lesdits un ou plusieurs paramètres incluent une mesure de la longueur de l'aire de contact.

10. Procédé selon la revendication 8, dans lequel lesdits un ou plusieurs paramètres incluent une mesure du déplacement radial maximal.

11. Procédé selon la revendication 8, dans lequel lesdits un ou plusieurs paramètres incluent une détermination de la charge du pneu sur la base d'au moins l'une parmi une mesure de la longueur de l'aire de contact et une mesure du déplacement radial maximal.

12. Procédé selon la revendication 8, dans lequel lesdites une ou plusieurs mesures incluent une valeur de vitesse associée au pneu.

13. Procédé selon la revendication 8, dans lequel la valeur de l'état d'usure est une indication de la profondeur de la bande de roulement du pneu.

14. Procédé selon la revendication 8, dans lequel la valeur de l'état d'usure est une indication de l'usure de la bande de roulement du pneu.
